# DEMANDE DE BREVET EUROPEEN

(11) **EP 1 736 048 A1**
(43) Date de publication de la demande: **27.12.2006**
(21) Numéro de dépôt: 06115764.0
(22) Date de dépôt: 21.06.2006
(51) Int. Cl.: A01K 61/00

(54) **Poche de conchyliculture incluant des moyens de rigidification repliables**

(30) Priorité: 23.06.2005 FR 0506410
(71) Demandeur: Yad s.a.s., 50770 Pirou (FR)
(72) Inventeur: CALLEWAERT, Christophe, 35140, SAINT-AUBIN DU CORMIER (FR)
(74) Mandataire: Larcher, Dominique

(57) **Abrégé**

L'invention a pour objet une poche de conchyliculture, de type grillagée, présentant une face supérieure (1) et une face inférieure (2) et comprenant des moyens de rigidication (3) destinés à maintenir un écartement entre lesdites faces supérieure et inférieure, caractérisé en ce que lesdits moyens de rigidification sont mobiles entre au moins deux positions :
- une position de rigidification, selon laquelle lesdits moyens de rigidification forment au moins une entretoise en lesdites faces supérieure et inférieure ;
- une position de stockage, selon laquelle lesdits moyens de rigidification sont amenés dans un plan parallèle ou confondu avec celui desdites faces supérieure et/ou inférieure.

## Description

L'invention concerne le domaine de la conception et de la réalisation des dispositifs et installations destinés à être utilisés dans le domaine de la conchyliculture. Notamment, mais non exclusivement, l'invention concerne le domaine de l'ostréiculture.

Une étape essentielle de la conchyliculture consiste à faire croître des coquillages sur des structures adaptées jusqu'à ce qu'ils aient atteint une taille leur permettant d'être consommés.

Ainsi, pour certains coquillages tels que principalement les huîtres, la conchyliculture se pratique grâce à des cages destinées à être solidarisées à des supports prévus en mer, et en ce qui concerne l'ostréiculture, sur l'estran ou en pleine mer. La structure de ces cages permet aux coquillages de capter les nutriments marins, principalement le plancton, permettant leur croissance.

La fixation des cages de conchyliculture à des supports est évidemment nécessaire pour empêcher que celles-ci, et leur contenu, ne soient emportées au gré des marées ou des courants.

On connaît dans l'état de la technique différents types de cages de conchyliculture et différents modes de solidarisation de celles-ci à des supports.

Parmi ceux-ci, une technique basique consiste à réaliser les cages en un matériau formant grillage délimitant un volume destiné à accueillir un grand nombre de coquillages. Ces cages se présentent sous la forme de poches et sont réalisées soit à l'aide d'un grillage métallique soit à l'aide d'un grillage en matière plastique. Ces poches sont fermées par des cordelettes ou des moyens équivalents.

Au moment du remplissage de telles cages, les faces inférieure et supérieure sont écartées l'une de l'autre (ce que permet leur structure grillagée), puis, une fois les coquillages placées dans la poche, celle-ci est refermée.

Ce type de poches est avantageux en termes de coût.

Toutefois, ces poches présentent un inconvénient en ce qu'elles ont tendance à trop serrer les coquillages les uns contre les autres.

De ce fait, les espaces entre les coquillages sont réduits, ce qui limite la circulation du plancton à l'intérieur de la poche. Les coquillages sont donc moins alimentés en plancton et leur croissance est par conséquent ralentie.

Pour pallier cet inconvénient, il a été proposé des cages grillagées présentant à chacune de leurs extrémités (dans le sens de la longueur), des arceaux ou des boucles rigides, montés fixes sur les faces inférieure et supérieure de la poche. Ces arceaux ou ces boucles définissent la section de la poche et lui conférent un volume minimal.

Ainsi, on assure une circulation suffisante de l'eau, et donc du plancton, entre les coquillages.

De plus, les poches ainsi rigidifiées permettent de placer les poches (et les huîtres qu'elles contiennent) en suspension sur un support (contrairement aux poches non rigidifiées qui sont posées sur des tables). Cette mise en suspension entraîne, sous l'effet de vagues, une mise en mouvement des huîtres les unes contre les autres qui tend à casser la pousse de coquille, ce qui procure une meilleure qualité d'huître.

Par ailleurs, les poches rigidifiées présentent un volume plus importants que les poches non rigidifiées. Il est donc possible d'y placer davantage d'huîtres, ce qui se traduit par des gains d'exploitation.

On note que les normes concernant les poches défmissent des dimensions en longueur et en largeur (100 cm x 50 cm), mais n'imposent pas d'épaisseur de poche.

Toutefois, lorsque ces poches ne sont pas utilisées, elles présentent un encombrement sensiblement augmenté par rapport aux poches « plates » mentionnées précédemment, et nécessitent par conséquent des espaces de stockage plus importants.

Or, la tailles des exploitations conchylicoles implique généralement le stockage de poches en nombre considérable.

L'invention a notamment pour objectif de pallier les inconvénients de l'art antérieur.

Plus précisément, l'invention a pour objectif de proposer une poche de conchyliculture qui permet une croissance satisfaisante des coquillages lors de son utilisation et qui soit peu encombrante lors de son stockage.

L'invention a également pour objectif de fournir une telle poche de conchyliculture qui soit simple de conception et qui puisse être obtenue de façon peu coûteuse.

Ces objectifs, ainsi que d'autres qui apparaîtront par la suite, sont atteints grâce à l'invention qui a pour objet une poche de conchyliculture, de type grillagée, présentant une face supérieure et une face inférieure et comprenant des moyens de rigidication destinés à maintenir un écartement entre lesdites faces supérieure et inférieure, caractérisé en ce que lesdits moyens de rigidification sont mobiles entre au moins deux positions :
- une position de rigidification, selon laquelle lesdits moyens de rigidification forment au moins une entretoise en lesdites faces supérieure et inférieure ;
- une position de stockage, selon laquelle lesdits moyens de rigidification sont amenés dans un plan parallèle ou confondu avec celui desdites faces supérieure et/ou inférieure.

Ainsi, en phase d'utilisation de la poche, celle-ci présente un volume prédéterminé et imposé par les moyens de rigidification, ce qui permet une bonne circulation du plancton dans la poche et, par conséquent, une croissance satisfaisante des coquillages.

A l'inverse, lorsque la poche n'est pas utilisée, il est possible de lui donner une forme plate selon laquelle elle présente un encombrement limité en vue de son stockage.

Selon une solution avantageuse, lesdits moyens de rigidication comprennent au moins un arceau monté pivotant par rapport à au moins l'un desdites faces supérieure et inférieure.

Selon une solution préférée, lesdits moyens de rigidification comprennent au moins une boucle rigide montée pivotante sur ladite face inférieure.

Selon un mode de réalisation préféré, lesdits moyens de rigidification comprennent deux boucles montées pivotantes sur ladite face inférieure.

Dans ce cas, ladite ou lesdites boucles sont chacune montées pivotantes autour d'un axe située à une distance, par rapport à l'extrémité en longueur la plus proche de ladite boucle, supérieure ou égale à la hauteur de ladite boucle.

De cette façon, les boucles peuvent être rabattues en position de stockage en s'inscrivant dans l'espace qui sépare leur axe de pivotement de l'extrémité de la poche la plus proche de cette axe. Cela évite de devoir déformer la poche dans sa longueur de façon importante pour la mettre à plat.

Selon un autre solution avantageuse, lesdites boucles sont chacune montées pivotantes autour d'un axe, l'écartement entre lesdits axes étant supérieur ou égal aux hauteurs cumulées desdites boucles.

Les boucles peuvent ainsi être rabattues en direction l'une de l'autre sans se chevaucher dans la position de stockage, ce qui évite une surépaisseur à la poche en position de stockage.

Selon une autre caractéristique, la poche de conchyliculture selon l'invention présente au moins un lien souple dont une extrémité est fixée auxdits moyens de rigidification, ledit lien pouvant être manipulé de l'extérieur de la poche pour faire passer lesdits moyens de rigidification dans au moins l'une desdites positions.

Bien entendu, d'autres moyens de manipulation des moyens de rigidification peuvent être envisagés selon d'autres modes de réalisation, notamment en rapportant une patte rigide avec un anneau de préhension sur les moyens de rigidification.

Préférentiellement, la poche présente des moyens d'accrochage à un support.

Préférentiellement, lesdits moyens d'accrochage sont portés par lesdits moyens de rigidification.

Selon une deuxième variante de réalisation, lesdits moyens d'accrochage comprennent au moins un crochet rapporté sur chaque boucle.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- les figures 1 et 2 sont des vues en perspective d'une poche de conchyliculture selon l'invention, respectivement en position d'utilisation et en position de stockage ;
- les figures 3 et 4 sont des vues en coupe transversale d'une poche de conchyliculture selon l'invention, respectivement en position d'utilisation et en position de stockage.

Tel que mentionné précédemment, le principe de l'invention réside dans le fait d'équiper une poche de conchyliculture de moyens de rigidification repliables.

Ces moyens de rigidification peuvent être constitués pas un arceau (ou plusieurs) susceptibles de donner une forme de tunnel à fond plat à la poche, l'arceau étant monté pivotant par rapport au fond.

Ils peuvent aussi être constitués par une boucle rigide (ou plusieurs) susceptible de procurer à la section de la poche une forme ovale ou ovoïde. On note qu'une telle boucle rigide peut être considérée comme réunissant deux arceaux en une seule pièce.

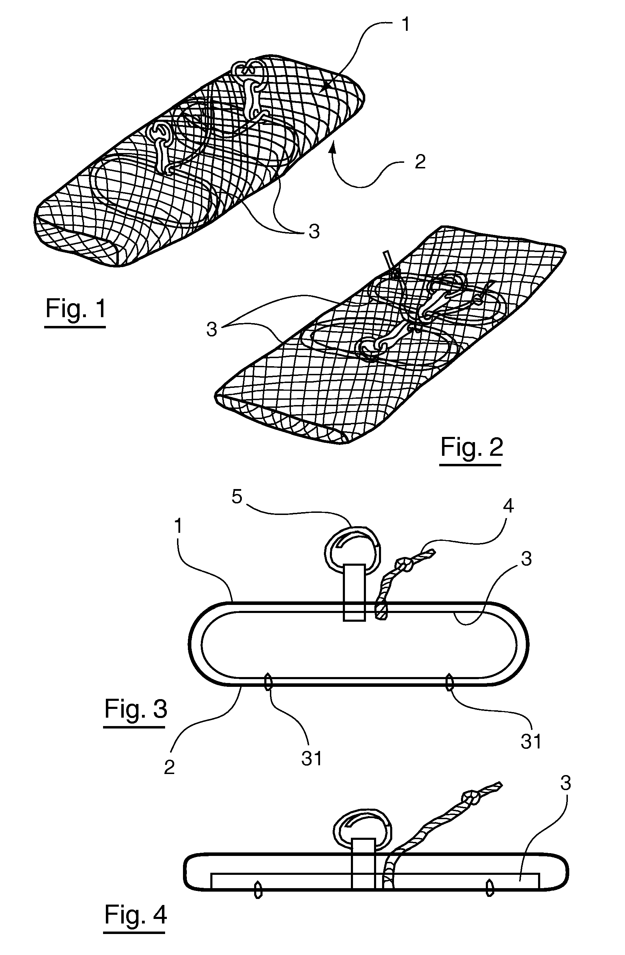

Les figures 1 et 2 illustrent un mode de réalisation préférentiel de l'invention selon lequel les moyens de rigidification de la poche grillagée présentant une face supérieure 1 et une face inférieure 2 sont constitués par deux boucles rigides 3 montées pivotantes sur la face inférieure 2 de la poche.

Ces boucles 3 peuvent être réalisées en différents matériaux, et notamment en acier, en fibres de verre ou en un matériau galvanisé.

Elles sont montées pivotantes sur la face inférieure de la poche à l'aide de deux anneaux 31 (figure 3) rapportées de façon à encercler une boucle 3 et le grillage de la poche. On comprend que les dimensions des anneaux assurent un jeu suffisant entre les boucles et le matériau grillagé pour permettre un pivotement sans effort des boucles.

Tel que cela apparaît sur la figure 3, on note que les boucles 3 présentent une forme oblongue. Toutefois, la forme et les dimensions (et même leur nombre au sein de la poche) des boucles pourront évoluer autant que de besoin sans sortir du cadre de l'invention.

Selon le présent mode de réalisation, les boucles 3 sont donc chacune pivotantes autour de l'axe passant par les anneaux 31, et peuvent être amenées :
- soit en position de rigidification, dans laquelle elles s'étendent sensiblement perpendiculairement aux faces supérieure et inférieure de la poche en les maintenant écartées l'une de l'autre, remplissant ainsi la fonction d'une entretoise ;
- soit en position de stockage, dans laquelle les boucles 3 s'étendent à plat (figure 4) entre les faces supérieure et inférieure de la poche ; les faces supérieure et inférieure ainsi que les boucles sont ainsi ramenées les unes contre les autres de façon à limiter tant que faire se peut l'épaisseur de la poche.

Préférentiellement, les boucles 3 sont montées à l'intérieur de la poche de façon à pouvoir être amenées à plat contre la face inférieure soit en direction l'une de l'autre, soit en direction opposée.

En d'autres termes, les anneaux 31 sont placés sur la poche de façon que:
- l'axe de pivotement des boucles soit positionné à une distance de l'extrémité de la poche (celle la plus proche d'une boucle considérée) supérieure ou égale à la hauteur des boucles, ceci permettant d'étendre à plat les boucles sans que celles-ci viennent en butée contre l'extrémité correspondante de la poche ;
- les axes de pivotement des boucles soient écartés l'un de l'autre d'une distance supérieure ou égale à deux fois la hauteur d'une boucle (ou aux hauteurs cumulées des boucles si celles-ci présentent des hauteurs différentes), ceci permettant de rabattre à plat les boucles sans qu'elles se chevauchent, tel qu'illustré par la figure 2.

Par ailleurs, une poche selon le présent mode de réalisation de l'invention présente de plus des moyens d'accrochage de la poche à un support.

Ces moyens d'accrochage comprennent une paire de crochets 5 (chaque boucle portant un crochet) prévus pour accrocher la poche sensiblement horizontalement sur un support.

Enfin, la poche décrite présente des liens souples 4 (par exemple une paire de cordelettes), lié chacun par une de leur extrémité à une boucle 3.

Ces liens 4sont utilisés par l'utilisateur pour faire passer les arceaux en position essentiellement horizontale. Les boucles peuvent être passées en position essentiellement verticale en tirant sur les crochets 5.

## Revendications

1. Poche de conchyliculture, de type grillagée, présentant une face supérieure et une face inférieure et comprenant des moyens de rigidication destinés à maintenir un écartement entre lesdites faces supérieure et inférieure,
**caractérisée en ce que** lesdits moyens de rigidification sont manipulables depuis l'extérieur de la poche et sont mobiles entre au moins deux positions :
- une position de rigidification, selon laquelle lesdits moyens de rigidification forment au moins une entretoise en lesdites faces supérieure et inférieure;
- une position de stockage, selon laquelle lesdits moyens de rigidification sont amenés dans un plan parallèle ou confondu avec celui desdites faces supérieure et/ou inférieure.

2. Poche de conchyliculture selon la revendication 1, **caractérisée en ce que** lesdits moyens de rigidication comprennent au moins un arceau monté pivotant par rapport à au moins l'un desdites faces supérieure et inférieure.

3. Poche de conchyliculture selon l'une des revendications 1 et 2, **caractérisée en ce que** lesdits moyens de rigidification comprennent au moins une boucle rigide montée pivotante sur ladite face inférieure.

4. Poche de conchyliculture selon la revendication 3, **caractérisée en ce que** lesdits moyens de rigidification comprennent deux boucles montées pivotantes sur ladite face inférieure.

5. Poche de conchyliculture selon l'une des revendications 3 et 4, **caractérisée en ce que** ladite ou lesdites boucles sont chacune montées pivotantes autour d'un axe située à une distance, par rapport à l'extrémité en longueur la plus proche de ladite boucle, supérieure ou égale à la hauteur de ladite boucle.

6. Poche de conchyliculture selon l'une des revendications 4 et 5, **caractérisée en ce que** lesdites boucles sont chacune montées pivotantes autour d'un axe, l'écartement entre lesdits axes étant supérieur ou égal aux hauteurs cumulées desdites boucles.

7. Poche ce conchyliculture selon l'une quelconque des revendications 1 à 6 **caractérisée en ce qu'**elle présente au moins un lien dont une extrémité est fixée auxdits moyens de rigidification, ledit lien pouvant être manipulé de l'extérieur de la poche pour faire passer lesdits moyens de rigidification dans au moins l'une desdites positions.

8. Poche de conchyliculture selon l'une quelconque des revendications 1 à 7, **caractérisée en ce qu'**elle présente des moyens d'accrochage à un support.

9. Poche de conchyliculture selon la revendication 8, **caractérisée en ce que** lesdits moyens d'accrochage sont portés par lesdits moyens de rigidification.

10. Poche de conchyliculture selon la revendication 9, **caractérisée en ce que** lesdits moyens d'accrochage comprennent au moins un crochet rapporté sur chaque boucle.
